# EUROPEAN PATENT APPLICATION

(11) **EP 3 593 975 A1**
(43) Date of publication of application: **15.01.2020**
(21) Application number: 18182428.5
(22) Date of filing: 09.07.2018
(51) Int. Cl.: B29C 53/08, B29C 53/84, B29K 23/00, B29K 77/00, B29L 23/00

(54) **METHOD OF SHAPING PRODUCTS MADE OF HDPE OR PA, PARTICULARLY SPATIAL SHAPING OF HDPE OR PA TUBES, AND A DEVICE FOR PERFORMING IT**

(71) Applicant: MSV SYSTEMS CZ s.r.o., 460 01 Liberec XI - Ruzodol I (CZ)
(72) Inventor: Tichy, David, 463 03 Straz nad Nisou (CZ); Belohlavek, Ondrej, 460 22 Liberec 22 (CZ)
(74) Representative: Musil, Dobroslav

(57) **Abstract**

The invention relates to a method of shaping products made of HDPE or PA, particularly spatial shaping of HDPE or PA tubes, in which HDPE or PA semi-finished product is shaped. A semi-finished product from HDPE or PA is first heated to temperature T close to melting temperature T_{g} of the material so that the material remains in a solid state, T the semi-finished product made of HDPE or PA is left at this temperature for time period t₁ required to obtain plasticity and to disrupt completely or partially the crystalline or semi-crystalline structure of the HDPE or PA material and for relaxing the internal tension of the HDPE or PA material and for restoring the amorphous or partially amorphous state of the material, whereupon the HDPE or PA semi-finished product is inserted into a shaping fixture and the temperature of the HDPE or PA material gradually decreases to ambient temperature.

The invention also relates to a device for performing the method.

## Description

### Technical field

The invention relates to a method of shaping products made of HDPE or PA, particularly spatial shaping of HDPE or PA tubes, in which a semi-finished product made of HDPE or PA is shaped.

The invention also relates to a device for performing the method.

### Background art

HDPE (high-density polyethylene) is a thermoplastic having a density ranging from 0.93 to 0.97 g.cm⁻³. This material is temperature resistant in the range of -50°C to +110°C, is chemical resistant, odourless and suitable for direct contact with food, as well as non-toxic and recyclable. Nowadays, a variety of products of rather complex shapes are produced from HDPE, namely by technologies of plastics injection moulding, it is also used for production of foils, blow moulding and extrusion. The result of these processes is finished products such as three-dimensional objects made by plastic injection moulding, foils, tubes, rods, etc. HDPE in the form of granules, powders or tablets is used as a semi-finished product for manufacturing products made of HDPE. Thus, the HDPE products are shaped during their primary production, while secondary shaping is usually not applied. In the case of special products, such as spatially shaped tubes and other longitudinal products, for the production of these products it is necessary to have special equipment which is very costly and its operation is rather demanding.

Yet relatively simple procedures for shaping plastic products from other materials are known, such as a method of producing complexly spatially shaped tubes from a material which is elastic at low temperatures by exerting force on a semi-finished product of a straight and low temperature elastic tube in this condition, whereby this semi-finished product undergoes elastic deformation and is inserted into a mould in the form of a labyrinth by which the originally straight tube is formed into the desired shape. Subsequently, the pre-shaped tube is heated by hot steam to the desired temperature either from the inside or from the outside and then is allowed to cool in the mould, whereby the originally straight tube takes on the permanent shape of the mould. It is obvious that thus bent tubes are made of a special elastic material which exhibits the required mechanical properties before moulding, i.e. before heating, as well as after moulding, i.e. after heating and cooling. In the case of hot steam bending, hot steam is fed into the inner space of the shaped tube, the temperature of which is usually in the range of 110 ° C to 140 ° C. As a result of heating the material of the shaped tube by this steam, the material of the shaped tube is brought into a plastic state in which, due to the stresses induced by placing the shaped tube into the labyrinth to change the originally straight tube only elastically deformed into the spatial shape of the labyrinth by inserting it into the labyrinth, that is to say, it acquires the desired resulting and permanent shape of the bent tube. After this process of plasticizing the material of the tube, the steam supply is disconnected and the shaped tube is cooled, by which means the shape of the shaped tube is fixed in this state. If necessary, both in steam and furnace bending, a resilient body, e.g. a spring, is inserted in the plastic tube to be bent, providing a circular cross-section of the plastic tube even after the tube material is plasticized during heating and cooling. The insertion of this resilient body is not always necessary - it depends on the dimensional parameters of the bent tube, the wall thickness of the tube, the bending size, etc. In the furnace heating, after inserting the resilient body, the elastic tube is placed into the labyrinth (bending mould), whereby by one of its ends it is inserted into the cavity of a stopper head situated at one end of the labyrinth. The subsequent process consists in heating the shaped tube in the furnace to a plastic state, the heating temperature being in the range of 120 ° C to 220 ° C. As a result of plasticizing the material of the shaped tube in the furnace, due to the stresses induced by placing the shaped tube in the labyrinth, the originally straight tube is deformed into the shape of the labyrinth, whereby during the subsequent cooling, the thus formed shape of the tube being shaped is fixed. Once the shape of the shaped tube has been fixed, the inner resilient body is pulled out.

It is known that during additional shaping of semi-finished products made of HDPE or PA this material is preheated to a temperature of a few tens of ° C, typically around 50 to 60 ° C, which leads to improving the elasticity of the material to a certain extent in comparison to the room temperature, due to which the tube can be then forced with great strength and effort into the shaping mould in the form of a labyrinth, which puts the operator under too much of a strain and, as a result, the operator may suffer from health problems caused by long-term overloading. Moreover, although these are not high temperatures, it is still necessary to perform the pushing of the tube into the labyrinth in protective clothing against burns, which further complicates the whole process.

The aim of the invention is therefore to eliminate or at least minimize the disadvantages of the background art, especially to improve the possibilities of additional shaping of HDPE or PA tubes and reduce the burden on operators.

### Principle of the invention

The aim of the invention is achieved by a method of shaping products made of HDPE or PA, whose principle consists in that the HDPE or PA a semi-finished product is first heated to temperature T close to melting point T_{g}, at which the material remains in a solid state, at this temperature T the HDPE or PA semi-finished product is left for a time period of t₁ which is necessary for the semi-product to obtain plasticity and for disrupting completely or partially the crystalline or semi-crystalline structure of the HDPE or PA material and to return the material to an amorphous or partially amorphous state, whereupon the HDPE or PA semi-finished product is inserted into in a shaping fixture and the temperature of the HDPE or PA material of the semi-finished product gradually decreases to ambient temperature.

The principle of the device for shaping products made of HDPE or PA consists in the fact that it comprises a heating space downstream of which, in the direction of the passage of the HDPE or PA material through the manufacturing process, a station of shaping fixtures is arranged, downstream of which, in the direction of the passage of the HDPE or PA material through the manufacturing process, is arranged a tempering space and/or an air cooling station.

The present invention allows additional shaping of products made of HDPE or PA into new and complex shapes by using the available semi-finished products and the available means of production, while preserving the quality and durability of the products, and while increasing significantly the process stability, possibly by using the machine insertion of the semi-finished product into a shaping fixture. Another benefit of the invention is that it helps reduce the burden on the operator.

### Description of drawings

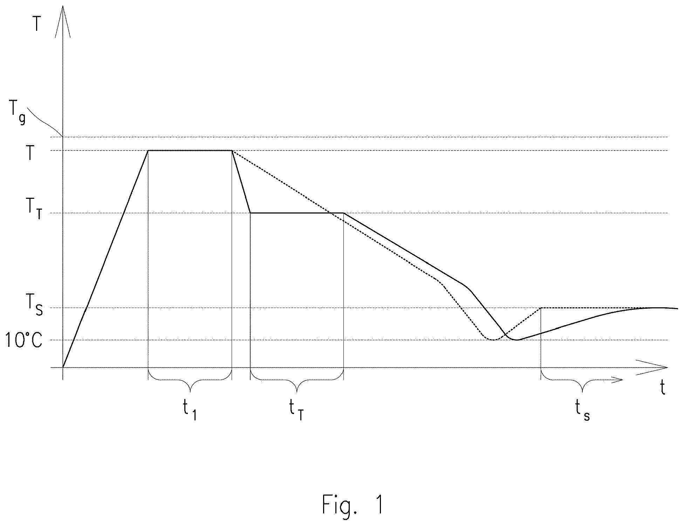

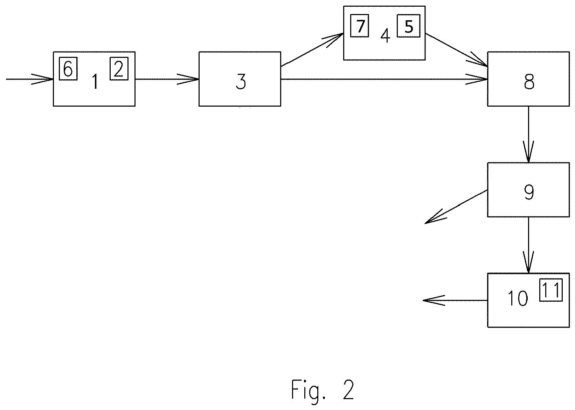

The invention is schematically represented in the drawings, wherein Fig. 1 shows a diagram of the temperature and time dependence during the process according to the invention and Fig. 2 shows a block diagram of an exemplary workstation according to the invention.

### Examples of embodiment

The invention will be further described on an exemplary embodiment of a method of shaping products made of HDPE or PA in which a pre-prepared product, in fact a semi-finished product, e.g., a straight tube or a multilayer tube, etc., is transformed into a desired final shape - the resulting product, e.g. spatially shaped (bent) tubes.

According to the first exemplary embodiment, a HDPE or PA semi-finished product is first heated to temperature T close to melting point Tg so that the polymer does not melt, i.e., the material remains in a solid state, and at that temperature T, the HDPE or PA semi-finished material is left for a time period t1 required to obtain plasticity and to disrupt completely or partially the crystalline or semi-crystalline structure of the HDPE or PA material, and to restore the amorphous or partially amorphous state of the material. This disruption of the crystalline (semi-crystalline) structure results in the loss of stiffness, or, in other words, increased plasticity of the HDPE or PA material. Subsequently, the thus prepared HDPE or PA semi-finished product is inserted, manually or mechanically, into a shaping fixture and the temperature of the HDPE or PA material is gradually decreased to tempering temperature TT at which the HDPE or PA material in the fixture is maintained for the time period tT of tempering, the period required to relax the internal stress and to completely or partially restore the crystalline or semi-crystalline structure of HDPE and PA material. Consequently, after the tempering the stiffness of the HDPE or PA material with reduced internal stress is increased again, whereby now it is already a product shaped by means of the shaping fixture into the desired shape. Subsequently, the product made from the re-shaped HDPE or PA material is cooled by air and optionally cooled by a cooling medium, e.g., water. Thereafter, HDPE or PA material is removed from the shaping fixture as a finished product made of re-shaped HDPE or PA. The temperature course over time for Example 1 is indicated in Fig. 1 by a solid line.

An example of the first embodiment of the described shaping method is the shaping of a HDPE tube having a diameter of 26 mm and a wall thickness of 2 mm into a spatially shaped bent tube. This tube is first heated to a temperature T near the melting point Tg = 130 ° C and maintained at temperature T for time period t1 = 40 min. Subsequently, the tube is inserted into a shaping fixture, e.g. a known shaping labyrinth, and the temperature is decreased to a temperature TT = 90 ° C at which the tube is maintained for a time period tT = 20 min. Subsequently, the now re-shaped HDPE tube is cooled by air for 5 minutes. Thereafter, the tube is removed from the shaping fixture as a finished product with a stable new shape as defined by the shaping fixture.

According to a second exemplary embodiment, the HDPE or PA semi-finished product is first heated to temperature T close to melting point Tg so that the polymer does not melt, i.e., the material remains in the solid state at temperature T, the HDPE or PA semi-finished product is left for time period t1 required to obtain plasticity and to disrupt completely or partially the crystalline, semi-crystalline structure of the HDPE or PA material and to restore the amorphous or partially amorphous state of the material. This disruption of the crystalline (semi-crystalline) structure leads to loss of stiffness or increased plasticity of the HDPE or PA material. Subsequently, the thus prepared HDPE or PA semi-finished product is inserted manually or mechanically into the shaping fixture and is allowed to cool freely (in the air) or, if necessary, cool additionally by a cooling medium, e.g., water. Thereafter, the HDPE or PA material is left in the shaping fixture at normal room temperature TS for time period tS needed to obtain shape-stabilized HDPE or PA material. Free cooling, possibly additional cooling and subsequent shape stabilization of the HDPE or PA material in the shaping fixture are needed to restore or partially restore the crystalline or semi-crystalline structure of HDPE or PA material and to relax the internal stress, which means that the stiffness of the HDPE or PA material which has now been already shaped by the shaping fixture into the desired shape of the product is increased again. Subsequently, the product from the reshaped HDPE or PA material is now removed from the shaping fixture. The temperature course over time for example 2 is represented in Fig. 1 by the dashed line which in the initial phase overlaps with the solid line of example 1. An example of the second embodiment of the described shaping method is the shaping of a HDPE tube having a diameter of 26 mm and a wall thickness of 2 mm into a bent spatial tube. This tube is first heated to a temperature T close to the melting point Tg = 130 °C the polymer does not melt, i.e. the material remains in the solid state, and maintained at temperature T for a time period t1 = 40 min. Subsequently, the tube is inserted into the shaping fixture, e.g. a known shaping labyrinth, and allowed to cool freely in air for 5 minutes. It is then cooled additionally with water at 10 °C for 0.5 min and afterwards left in the shaping fixture at normal room temperature TS for a time period tS = 12 to 48 h. The tube is then removed from the shaping fixture as a finished product with required overbend 3 ° to 6 ° and a slightly unstable new shape defined by the shaping fixture.

The device for performing the method comprises a heating space **1**, such as a furnace, with a thermostat **6** for setting and maintaining temperature T close to melting temperature Tg of the respective material, and with a timer **2** of the required time period t1 at temperature T. In the direction of the passage of the HDPE or PA material through the manufacturing process, downstream of the heater space **1** is disposed a station **3** of shaping fixtures, where the heated HDPE or PA material is inserted, manually or mechanically, into the shaping fixtures not shown, e.g., known shaping labyrinths (not shown). In the direction of the passage of the HDPE or PA material through the manufacturing process, a tempering space **4**, such as a suitable tempering furnace, is arranged downstream of the station **3** of shaping fixtures and/or an air cooling station **8** is arranged there, downstream of which is arranged a station **9** for additional cooling by a cooling medium, e.g., water, downstream of which is arranged, if appropriate, a stabilizing station **10**. The tempering space **4** is provided with a tempering thermostat **7** for setting and maintaining the temperature **T**_{T} of the tempering and is further provided with a timer **5** of the time period t_{T} of the tempering for setting the duration t_{T} of the tempering. The stabilization station **10** is provided with a stabilization timer **11** for setting the stabilization time period t_{S}.

### Industrial applicability

The invention is applicable for mass production of HDPE or PA products by further shaping pre-shaped HDPE or PA semi-finished products, especially for the spatial shaping of HDPE or PA tubes or straight HDPE or PA tubes.

## Claims

1. A method of shaping products made of HDPE or PA, particularly spatial shaping of HDPE or PA tubes, in which a semi-finished product from HDPE or PA is shaped, **characterized in that** the HDPE or PA semi-finished product is first heated to temperature T close to melting point T_{g} of the material so that the material remains in a solid state, at this temperature T the HDPE or PA semi-finished product is left for the time t₁ required to obtain plasticity and to completely or partially disrupt the crystalline or semi-crystalline structure of the HDPE or PA material and for restoring the amorphous or partially amorphous state of the material, whereupon the HDPE or PA semi-finished product is inserted into a shaping fixture and the temperature of the HDPE or PA material gradually decreases to ambient temperature.

2. The method according to claim 1, **characterized in that** the temperature of the HDPE or PA material is first reduced to tempering temperature TT at which the HDPE or PA material in the shaping fixture is maintained for a tempering time period t t_{T} required for recovering or partially restoring the crystalline or semi-crystalline structure and for relaxing the internal tension of the HDPE or PA material and subsequently the HDPE or PA material is freely cooled by air and optionally is cooled additionally by a cooling medium, whereupon the HDPE or PA material is removed from the shaping fixture as a finished product made from reshaped HDPE or PA.

3. The method according to claim 1, **characterized in that** the temperature of the HDPE or PA material is decreased by free cooling in air which may be followed by additional cooling by a cooling medium, whereupon the HDPE or PA material is left in the shaping fixture at normal room temperature T_{S} for a time period t_{S} required for the shape stabilization of the HDPE or PA material and subsequently the HDPE or PA material is removed from the shaping fixture as a finished product made from reshaped HDPE or PA.

4. The method according to claim 2 or 3, **characterized in that** the cooling medium is water.

5. A device for performing the method of shaping products made of HDPE or PA according to claims 1 to 4, **characterized in that** it comprises a heating space (1), downstream of which, in the direction of the passage the HDPE or PA material through the manufacturing process, is arranged a station (3) of shaping fixtures downstream of which, in the direction of the passage the HDPE or PA material through the manufacturing process, is arranged a tempering space (4) and/or an air cooling station (8).

6. The device according to claim 5, **characterized in that** downstream of the air cooling station (8) is arranged a station (9) for additional cooling and, if appropriate, also a stabilization station (10).

7. The device according to claim 5 or 6, **characterized in that** the heating space (1) is provided with a thermostat (6) adapted to set and maintain a temperature T close to melting point T_{g} of the material and with a timer (2) of the time period t₁ adapted to set the time period of maintaining the temperature T close to melting point T_{g}.

8. The device according to any of claims 5 to 7, **characterized in that** the stabilization station (10) is provided with a stabilization timer (11) adapted to set the time period t_{S} of stabilization.
